(19) Europäisches Patentamt / European Patent Office / Office européen des brevets

(11) **EP 1 986 443 B1**

(12) **EUROPEAN PATENT SPECIFICATION**

(45) Date of publication and mention
of the grant of the patent:
**21.03.2012 Bulletin 2012/12**

(51) Int Cl.:
**H04N 9/67** (2006.01)

(21) Application number: **06840594.3**

(86) International application number:
**PCT/CN2006/003515**

(22) Date of filing: **21.12.2006**

(87) International publication number:
**WO 2007/071194 (28.06.2007 Gazette 2007/26)**

(54) **METHOD FOR REALIZING COLOR INTERPOLATION OF VALUE CORRECTION OF EXCEPTIONAL POINTS**

VERFAHREN ZUR REALISIERUNG EINER FARBINTERPOLATION DER WERTKORREKTUR AUSSERORDENTLICHER PUNKTE

PROCEDE DE REALISATION D'INTERPOLATION DE COULEUR DE CORRECTIONS DE VALEUR DE POINTS EXCEPTIONNELS

(84) Designated Contracting States:
**AT BE BG CH CY CZ DE DK EE ES FI FR GB GR HU IE IS IT LI LT LU LV MC NL PL PT RO SE SI SK TR**

(30) Priority: **21.12.2005 CN 200510022410**

(43) Date of publication of application:
**29.10.2008 Bulletin 2008/44**

(73) Proprietor: **Byd Company Limited
Guangdong Province 518119 (CN)**

(72) Inventor: **ZHU, Ziyu
Shenzhen, Guangdong 518119 (CN)**

(74) Representative: **Cacciamani, Clizia
Innova & Partners
Via Cola di Rienzo, 265
00192 Roma (IT)**

(56) References cited:
**EP-A- 0 732 859     EP-A- 1 389 771
EP-A- 1 605 403     CN-A- 1 612 615
JP-A- 09 074 570     US-A1- 2005 213 843**

## Description

### Field of the Invention

The present invention relates to a method for color interpolation, and more specially to a method that is designed to realize value correction of exceptional points along with color interpolation for a Bayer color matrix obtained during the process of digital image processing.

### Background of the Invention

During the process of digital image processing, color interpolation must be carried out for the image obtained by a BAYER color matrix, so as to recover the image colors. Most existing methods realize interpolation for the pixel points with spatial correlation or color correlation.

EP 0732859 describes an apparatus used to processing a digitized image signal obtained from a image sensor having color photo sites aligned in rows and columns that generate at least three separate color values but only one color value for each photo site location, means for interpolating color values for each photo site location so that it has three different color values. The apparatus includes a memory for storing the digitized image signal and a processor operative with said storing means. The processor also includes a structure for obtaining Laplacian second-order values and gradient values in at least two image direction from nearby photo sites of the same column and row. In EP 0732859, "Green Plane Interpolation" and "Red and Blue (Chroma) Interpolation" are further disclosed.

However, with the above methods, if any exceptional point occurs in the BAYER matrix, the exceptionality will diffuse to the interpolation for the surrounding points, and thereby strongly influences the result of color interpolation; in addition, utilizing a specific method solely often results in image blur on the boundaries or pseudo colors in fine structures, which has adverse effect to the result of color interpolation.

### Summary of the Invention

The object of the present invention is to provide a method for color interpolation that can realize value correction of exceptional points in an image and thereby improves image quality.

The object of the present invention is attained as follows: the color interpolation method for realizing value correction of exceptional points as set out in claim 1.

Compared to the prior art, the present invention has the following advantages: the present invention can eliminate exceptional points in an image, prevent diffusion of exceptional color values in the interpolation process, and thereby refine image details and colors; in addition, it can enhance image boundaries and make the image on the boundaries clearer, and therefore prevent pseudo colors.

### Brief Description of the Drawings

Fig.1 and Fig.4 show a Bayer matrix with a Blue center point and a Bayer matrix with a Red center point;
Fig.2 and Fig.3 show a Bayer matrix with a Green center point, respectively;
Fig.5 is a flow diagram of the present invention.

### Detailed Description of the Embodiments

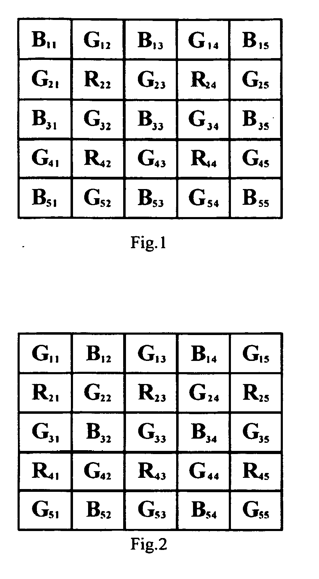

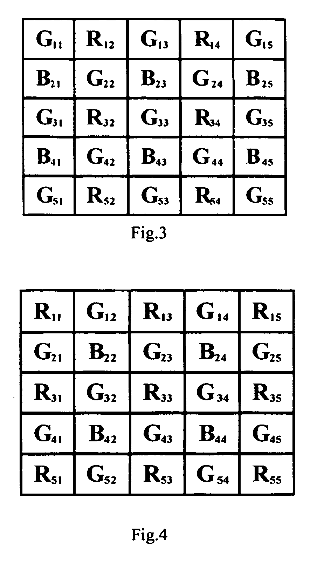

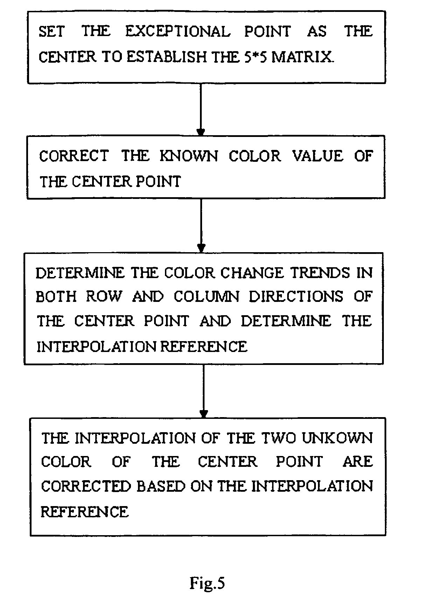

Please see Fig.1-Fig.5, the color interpolation method for realizing value correction for exceptional points in the present invention utilizes a 5X5 Bayer matrix to realize interpolation in the image. The 5X5 Bayer matrix may be in either of the following two cases: 1) the known color of the center point is Blue (as shown in Fig.1) or Red (as shown in Fig.4), and the green points are in the same positions; 2) the known color of the center point is Green, and the positions of Red points and the positions of Blue points are interchangeable, as shown in Fig.2 and Fig.3.

In the first case, the interpolation method comprises the following steps:

1) establishing a matrix for color interpolation; setting out a point at which interpolation is to be carried out as the center point to establish a 5X5 Bayer matrix, in which each point is represented by one known color and two unknown colors, the three colors being R, G, and B, and the known color of the center point is R or B;
2) adjusting the known color value of the center point: adjusting the known color value of the center point based on the relationship of difference of the known color value of points in the Matrix with the same known color as that of the center point;

3) determining a reference: judging color change trends along row and column directions in which the center point is located, and selecting the row or column direction in which the center point is located as a reference direction for interpolation calculation;

4) interpolating for the two unknown color values of the center point: taking the average values of the known color values of points, which are in the reference direction, and the known colors of which are the unknown colors of the center point, as the estimated values for the unknown colors of the center point, and correcting the estimated values with difference values between the known color values of another two points with the same known color as that of the center point in the reference direction and the known color value of the center point□so as to obtain interpolation results for the two unknown colors of the center point.

In above step 2), the principle for the adjusting calculation is as follows: if the known color value of the center point is higher by a preset value (Th) than the known color values of all surrounding points that have the same known color as the center point or lower by the preset value (Th) than the known color values of all surrounding points with the same known color as that of the center point, the known color value of the center point is replaced with the average value of the known color values of the surrounding points; otherwise keep the known color value of the center point. The adjusting process is as follows:

$$Ra = 1/8*(R11 + R13 + R15 + R31 + R35 + R51 + R53 + R55);$$
$$Rb = R33 + Th;$$
$$Rs = R33 - Th;$$

If R11>Rb, R13>Rb, R15>Rb, R31>Rb, R35>Rb, R51>Rb, R53>Rb, and R55>Rb are all true, or R11<Rs, R13<Rs, R15<Rs, R31<Rs, R35<Rs, R51<Rs, R53<Rs, and R55<Rs are all true, then R33 = Ra; otherwise R33 = R33.

After the adjusting for point R33 is completed, two parameters II1 and V1 can be calculated and obtained:

$$H1 = |G32 - G34| + |R33 - R31 + R33 - R35|$$
$$V1 = |G23 - G43| + |R33 - R13 + R33 - R53|$$

The two parameters H1 and V1 describe the color change trends along column and row directions in which the center point is located, respectively; the color change trend can be described in two aspects: the difference value between surrounding Green points in row and column directions (i.e., |G32-G34| and |G23-G43|, respectively), and the difference value between the actual value of Red R33 of the center point and the average value of surrounding points ((R31+R35)/2 and (R13+R53)/2) in row and column directions (due to the fact that the contribution of Green is the highest in the contribution of colors to brightness, the weight of Green difference is higher than the weight of Red difference). In the direction in which the parameters are smaller, the color values are more authentic to reflect the brightness change trend; therefore, the color values that have brightness change trend smootherthat varies less brightness change trend can be used in the interpolation calculation.

According to above deduction, in the case that the center point is Red, as shown in Fig.4, the interpolation calculations for G33 and B33 are as follows:

If H1< V1:

$$G33 = 1/2*(G32 + G34) + 1/4*(R33 - R31 + R33 - R35);$$
$$B33 = 1/4*(B22 + B24 + B42 + B44) + 1/4*(R33 - 1/2*(R13 + R53) + 1/2*(G32 + G34) - 1/2*(G23 + G43));$$

If H1 > V1:

$$G33 = 1/2*(G23 + G43) + 1/4*(R33 - R13 + R33 - R53);$$
$$B33 = 1/4*(B22 + B24 + B42 + B44) + 1/4*(R33 - 1/2*(R31 + R35) + 1/2*(G23 + G43) - 1/2*(G32 + G34));$$

If H1-V1:

$$G33 = 1/4*(G32 + G34 + G23 + G43) + 1/8*(R33 - R31 + R33 - R35 + R33 - R13 + R33 - R53);$$
$$B33 = 1/4*(B22 + B24 + B42 + B44) + 1/8*(R33 - R31 + R33 - R35 + R33 - R13 + R33 - R53);$$

In above interpolation method, for G33 and B33, the interpolation calculation is carried out for the values of unknown colors with the known color values that reflects brightness change trend that varies less, which comprises two parts: carry out estimation with the average value of surrounding points with the same known color in row or column direction in which the brightness change trend v; carry out correction for the estimated value with the difference between the center point and the surrounding points that have the same known color and reflect brightness change trend that varies less, so as to obtain a color interpolation result that is closer to the actual value. In the interpolation calculation for B33 and G33, since the difference in Green color has higher weight than the difference in Red color in terms of the contribution to color brightness, the deviation in green color in row or column must be considered in the interpolation process.

In the second case, the interpolation method comprises the following steps:

1) establishing a Bayer matrix for color interpolation: setting out a point at which interpolation is to be carried out as a center point to establish a 5X5 Bayer matrix, in which each point is represented by one known color and two unknown colors, the three colors being R, G, and B, and the known color of the center point is G;

2) adjusting the known color value of the center point: adjusting the known color value of the center point based on the relationship of difference of the known color value of points in the matrix with the same known color as that of the center point;

3) adjusting the known color value of points surrounding to the center point: adjusting the known color value of two points with B as known color surrounding to the center point and two points with R as known color surrounding to the center point;

4) interpolating for two unknown color values of the center point: taking average values of the adjusted known color values of the two points with R or B as known color surrounding to the center point respectively as estimated values for color R or B of the center point, and correcting the estimated values with difference values between the known color value of the center point and the known color values of the surrounding points, so as to obtain the values of color R and B of the center point, respectively.

Please see Fig.3. For step 2), the principle for adjusting is as follows: if the difference value between the known color values of G33 and the eight surrounding points with the same known color as that of the center point is higher than parameter Th and the difference between G33 and the average value of the known color values of the eight points is also higher than Th, it is deemed that G33 is exceptional, and the original value must be replaced with the average value of the eight surrounding points. The calculation process is as follows:

Ga = 1/8*(G13 + G22 + G24 + G31 + G35 + G42 + G44 + G53);
If |G33-G13|>Th, |G33-G22|>Th, |G33-G24|>Tb, |G33-G31|>Th, G33-G35|>Th, |G33-G42|>Th, |G33-G44|>Th, |G33-G53|Th along with |G33 - Ga|> Th, then G33 = Ga.

After G33 is adjusted, R32, R34 (i.e., the reference point for R33), B23, and B43 (i.e., the reference point for B33) must be adjusted, in the same principle as the adjusting calculation for R33 (or B33) in the first case, in order to reduce the adverse effect of exceptionality of reference point to the interpolation calculation, since there arc only two reference points for interpolation calculation evaluation for R33 (or B33). The reference points with the same known color around R32 are R12, R14, R34, R52, and R54; the reference points with the same known color around R34 are R12, R14, R32, R52, and R54; the reference points with the same known color around B23 arc B21, B25. B41, B43, and B45, the reference points with the same known color around B43 are B21, B23, B25, B41, and B45. In the view of the position relationship between the points and the adjusted points, the weights of the points are slightly different to each other. The weighted average value equations are as follows:

$$Ral = 1/8*(2*R12 + R14 + 2*R34 + 2*R52 + R54)$$

$$Rar = 1/8*(R12 + 2*R14 + 2*R32 + R52 + 2*R54)$$

$$Bau = 1/8*(2*B21 + 2*B25 + B41 + 2*B43 + B45)$$

$$Bad = 1/8*(B21 + 2*B23 + B25 + 2*B41 + 2*B45)$$

In the same principle for adjusting for G33, if the difference values between R32 (or R34, B23, B43) and the five reference points with the same color around R32 (or R34, B23, B43) are higher than parameter Th and the weighted average difference values between R32 (or R34, B23, B43) and the five points are higher than Th, it is deemed that R32 (or R34, B23, B43) is exceptional, and the original value must be replaced with the weighted average value; otherwise the original value can be used.

After the four points are adjusted, reference points without exceptionality can be obtained for interpolation calculation. The interpolation employs the basic point for reference in the evaluation and employs the values of Green color for compensation and correction. The interpolation equations are as follows:

$$R33 = 1/2*(R32 + R34) + 1/4*(G33 - Rl + G33 - Rr)$$

$$B33 = 1/2*(B23 + B43) + 1/4*(G33 - Bu + G33 - Bd);$$

Wherein:

$$Rl = 1/4*(G33 + G31 + G22 + G42);$$

$$Rr = 1/4*(G33 + G35 + G24 + G44);$$

$$Bu = 1/4*(G33 + G13 + G22 + G24);$$

$$Bd = 1/4*(G33 + G53 + G42 + G44);$$

It is seen from above equations: the interpolation: estimation also comprises two parts: generating an estimated value with the average value of two surrounding points after correction, and then correcting the estimated value with the difference in Green color between the center point and the surrounding Green points, so as to obtain the final color interpolation result. Other interpolation methods that make Green point as center point is similar to the interpolation method described above, only the positions of Red and Blue colors must be exchanged.

## Claims

1. A method for realizing color interpolation of value correction of exceptional points, the method comprises the following steps:

    1) establishing a matrix for color interpolation: setting out a point at which interpolation is to be carried out as a center point to establish a 5X5 Bayer matrix, in which each point is represented by one known color and two unknown colors, the three colors being R, G, and B, and the known color of the center point is G, the 5X5 Bayer matrix represented by the known color is $M1 = \begin{pmatrix} G11 & R12 & G13 & R14 & G15 \\ B21 & G22 & B23 & G24 & B25 \\ G31 & R32 & G33 & R34 & G35 \\ B41 & G42 & B43 & G44 & B45 \\ G51 & R52 & G53 & R54 & G55 \end{pmatrix}$, or

$M2 = \begin{pmatrix} G11 & B12 & G13 & B14 & G15 \\ R21 & G22 & R23 & G24 & R25 \\ G31 & B32 & G33 & B34 & G35 \\ R41 & G42 & R43 & G44 & R45 \\ G51 & B52 & G53 & B54 & G55 \end{pmatrix}$, $R_{ij}$, $G_{ij}$, and $B_{ij}$ are the known color values of each point in the 5X5

Bayer matrix, and $1 \leq i,j \leq 5$, **i** and j are natural numbers;

2) adjusting the known color value of the center point based on the relationship of difference of the known color value of points in the matrix with the same known color as that of the center point, wherein the adjusting is performed as follows: if the differences between the known color value of the center point and the known color values of surrounding points with the same known color as the known color of the center point are higher than a preset value, and a difference between the known color value of the center point and the average value of the known color values of surrounding points with the same known color as the known color of the center point is higher than the preset value, then the known color value of the center point is replaced with the average value of the known color values of the surrounding points; otherwise the known color value of the centerpoint is maintained;

3) adjusting each reference point with B or R as known color adjacent to the center point, wherein for each reference point if all difference values between the known color value of the reference point and the known color value of each surrounding point with the same color as the reference point are higher than the preset value and a difference value between the known color value of the reference point with a weighted average value of all surrounding points with the same color as the reference point is higher than the preset value, the known color value of the reference point is replaced with the weighted average value, otherwise the original value is used, wherein for M1, the weight average values are calculated as follow:

Ral=1/8*(2*R12+R14+2*R34+2*R52+R54) *for* R32 *as reference point,*

Rar=1/8*(R12+2*R14+2*R32+R52+2*R54) *for* R34 *as reference point,*

Bau=1/8*(2*B21+2*B25+B41+2*B43+B45) *for* B23 *as reference point,*

Bad=1/8*(B21+2*B23+B25+2*B41+2*B45) *for* B43 *as reference point;*

for M2, the weight average values are calculated as follow:

Bal=1/8*(2*B12+B14+2*B34+2*B52+B54) *for* B32 *as reference point,*

Bar=1/8*(B12+2*B14+2*B32+B52+2*B54) *for* B34 *as reference point,*

$$Rau=1/8*(2*R21+2*R25+R41+2*R43+R45) \quad \text{for } R23 \text{ as reference point,}$$

$$Rad=1/8*(R21+2*R23+R25+2*R41+2*R45) \quad \text{for } R43 \text{ as reference point;}$$

4) interpolating for the two unknown color values of the center point: taking average values of the adjusted known color values of the two points with R or B as known color surrounding to the center point respectively as estimated values for color R or B of the center point, and correcting the estimated values with difference values between the known color value of the center point and the known color values of the surrounding points, so as to obtain the values of color R and B of the center point, respectively, wherein, in the step 4), for M1:

the value of R of the center point is calculated as follows:

$$R33=1/2*(R32+R34)+1/4*(G33-Rl+G33-Rr);$$

and
the value of B of the center point is calculated as follows:

$$B33=1/2*(B23+B43)+1/4*(G33-Bu+G33-Bd);$$

wherein

$$Rl = 1/4*(G33 + G31 + G22 + G42);$$

$$Rr = 1/4*(G33 + G35 + G24 + G44);$$

$$Bu = 1/4*(G33 + G13 + G22 + G24);$$

$$Bd = 1/4*(G33 + G53 + G42 + G44);$$

for M2,
the value of B of the center point is calculated as follows:

$$B33=1/2*(B32+B34)+1/4*(G33-Bl+G33-Br);$$

and
the value of R of the center point is calculated as follows:

$$R33=1/2*(R23+R43)+1/4*(G33-Ru+G33-Rd);$$

wherein

$$Bl = 1/4*(G33 + G31 + G22 + G42);$$

$$Br = 1/4*(G33 + G35 + G24 + G44);$$

$$Ru = 1/4*(G33 + G13 + G22 + G24);$$

$$Rd = 1/4*(G33 + G53 + G42 + G44).$$

**Patentansprüche**

1. Eine Methode, um Farbinterpolation der Wertkorrektur von Ausnahmepunkten durchzuführen, besteht aus den folgenden Stufen:

1) Eine Matrix für Farbinterpolation festsetzen; Festlegung eines Punktes, an dem Interpolation ist es, als ein Mittelpunkt durchzuführen, um eine 5X5 Matrix festzusetzen, in dem jeder Punkt von einer bekannten Farbe und zwei unbekannten Farben räpresentiert wird, seien die drei Farben R, G, und B und die bekannte Farbe des Mittelpunktes sei G, die durch die bekannte Farbe räpresentierte 5X5 Bayer Matrix ist $M1 = \begin{pmatrix} G11 & R12 & G13 & R14 & G15 \\ B21 & G22 & B23 & G24 & B25 \\ G31 & R32 & G33 & R34 & G35 \\ B41 & G42 & B43 & G44 & B45 \\ G51 & R52 & G53 & R54 & G55 \end{pmatrix}$

oder $M2 = \begin{pmatrix} G11 & B12 & G13 & B14 & G15 \\ R21 & G22 & R23 & G24 & R25 \\ G31 & B32 & G33 & B34 & G35 \\ R41 & G42 & R43 & G44 & R45 \\ G51 & B52 & G53 & B54 & G55 \end{pmatrix}$, $R_{ij}$ $G_{ij}$ und $B_{ij}$ sind die bekannten Farbwerte jedes Punktes in der 5X5 Bayer Matrix, und $l \leq i, j \leq 5$, $i$, und $j$ sind natürliche Zahlen;

2) Einstellung des bekannten Farbwertes des Mittelpunktes auf die Beziehung der Differenz des bekannten Farbwertes der Punkten in der Matrix mit der gleichen bekannten Farbe wie die des Mittelpunktes begründet, wobei die Einstellung wie folgt durchgeführt wird: wenn die Differenzen zwischen dem bekannten Farbwert des Mittelpunktes und den bekannten Farbwerten der umliegenden Punkte mit der gleichen bekannten Farbe wie die bekannte Farbe des Mittelpunktes höher als ein vorgegebener Wert sind, und eine Differenz zwischen dem bekannten Farbwert des Mittelpunktes und dem Durchschnittswert der bekannten Farbwerten von umliegenden Punkte mit der gleichen bekannten Farbe wie die bekannte Farbe des Mittelpunktes ist höher als ein vorgegebener Wert, wird der bekannte Farbwert des Mittelpunktes mit dem Durchschnittswert der bekannten Farbwerten der umliegenden Punkte ersetzt; andernfalls wird die bekannte Farbe des Mittelpunktes behalten.

3) Einstellung jedes Bezugpunktes mit B oder K als bekannte Farbe neben den Mittelpunkt, wobei für jeden Bezugspunkt wenn alle Differenzwerte zwischen dem bekannten Farbwert des bezugspunkt und dem bekannten Farbwert jedes umliegenden Punktes mit der gleichen Farbe wie der Bezugspunkt sind höher als der vorgegebene Wert und eine Differenz zwischen dem bekannten Farbwert der Bezugspunkt mit einem gewichteten Durchsnittswert aller umliegenden Punkte mit der gleichen Farbe wie der Bezugspunkt ist höher als der vorgegebene Wert, der bekannte Farbwert des Bezugspunktes mit dem gewichteten Durchsnittswert ersetzt wird, da sonst wird der ursprüngliche Wert verwendet, wobei für M1 sind die Gewichtesmittelwerte wie folgt berechnet:

$$Ral = 1/8*(2*R12 + R14 + 2*R34 + 2*R52 + R54) \text{ für R32 als Bezugspunkt;}$$

$$Rar = 1/8*(R12 + 2*R14 + 2*R32 + R52 + 2*R54) \text{ für R31 als Bezugspunkt;}$$

$$Bau=1/8*(2*B21+2*B25+B41+2*B43+B45) \text{ für B23 als Bezugspunkt;}$$

$$Bad=1/8*(B21+2*B23+B25+2*B41+2*B45) \text{ für B13 als Bezugspunkt;}$$

für M2 sind die Gewichtesmittelwerte wie folgt berechnet:

$$Bal=1/8*(2*B12+B14+2*B34+2*B52+B54) \text{ für B32 als Bezugspunkt;}$$

$$Bar=1/8*(B12+2*B14+2*B32+B52+2*B54) \text{ für B31 als Bezugspunkt;}$$

$$Rau=1/8*(2*R21+2*R25+R41+2*R43+R45) \text{ für R23 als Bezugspunkt;}$$

$$Rad=1/8*(R21+2*R23+R25+2*R41+2*R45) \text{ für R13 als Bezugspunkt;}$$

4) Interpolation für die zwei unberkannte Farbwerte des Mittelpunktes: Durchschnittswerte der eingestellten bekannten Farbwerte der zwei Punkte mit R oder B als bekannte Farbe umliegende den Mittelpunkt nehmen, bzw. als Schätzwerte für die Farbe R oder B des Mittelpunktes, und die Schätzwerte mit Differenwerte zwischen dem bekannten Farbwert des Mittelpunktes und den bekannten Farbwerte der umliegenden Punkten korrigieren, um die Werte der Farbe R und B des Mittelpunktes bzw. zu erhalten; wobei, in der Stufe 4), für M1:

der Wert von R des Mittelpunktes wird wie folgt berechnet:

$$R33=1/2*(R32+R34)+1/4*(G33-R1+G33-Rr); \text{ und}$$

der Wert von B des Mittelpunktes wird wie folgt berechnet:

$$B33=1/2*(B32+B34)+1/4*(G33-Bu+G33-Bd);$$

wobei

$$R1 = 1/4*(G33+G31+G22+G42);$$

$$Rr = 1/4*(G33+G35+G24+G44);$$

$$Bu = 1/4*(G33+G13+G22+G24);$$

$$Bd = 1/4*(G33+G53+G42+G44);$$

für M2,
der Wert von B des Mittelpunktes wird wie folgt berechnet:

$$B33=1/2*(B32+B34)+1/4*(G33-Bl+G33-Br);$$

der Wert von R des Mittelpunktes wird wie folgt berechnet:

$$R33=1/2*(R32+R34)+1/4*(G33-Ru+G33-Rd);$$

wobei

$$B1 = ¼*(G33+G31+G22+G42);$$

$$Br = ¼*(G33+G35+G24+G44);$$

$$Ru = ¼*(G33+G13+G22+G24);$$

$$Rd = ¼*(G33+G53+G42+G44);$$

## Revendications

1.  Une méthode pour la réalisation de l'interpolation de la couleur de la correction de valeur des points exceptionels, la méthode comprenant le phases suivantes:

    1) établiment d'une matrice pour l'interpolation de la couleur: selection d'un point où l'interpolation va être conduite comme point central pou établir une matrice de Bayer 5X5, dans lequel chacun point est representé par une couleur connue et deux couleur inconnues, les trois couleurs étant R, G et B, et la couleur connue du point central étant G, la matrice de Bayer 5X5 representée par la couleur connue est $M1 = \begin{pmatrix} G11 & R12 & G13 & R14 & G15 \\ B21 & G22 & B23 & G24 & B25 \\ G31 & R32 & G33 & R34 & G35 \\ B41 & G42 & B43 & G44 & B45 \\ G51 & R52 & G53 & R54 & G55 \end{pmatrix}$

    ou $M2 = \begin{pmatrix} G11 & B12 & G13 & B14 & G15 \\ R21 & G22 & R23 & G24 & R25 \\ G31 & B32 & G33 & B34 & G35 \\ R41 & G42 & R43 & G44 & R45 \\ G51 & B52 & G53 & B54 & G55 \end{pmatrix}$, $R_{ij}$, $G_{ij}$, et $B_{ij}$, sont les valeurs de la couleur connue de chaque point dans la matrice de Bayer 5X5, et $I \leq i$, $j \leq 5$, i et j sont des numéros naturels;

    2) reglage du valeur de la couleur connue du point centrale sur la base de la relation de difference entre le valeur de la couleur connue des points dans la matrice et la même couleur connue comme s'elle était au point central, où le reglage est éxecuté comme suivant: si la differance entre le valeur de la couleur connue du point central et les valeurs de la couleur connue des points environnants avec la même couleur connue ainsi que la couleur connue du point central sont supérieurs d'un valeur predeterminé, et une difference entre le valeur de la couleur connue du point central et le valeur moyen des valeurs des couleurs connues des points environnants avec la même couleur connue ainsi que la couleur connue du point central est supérieur du valeur predeterminé, alors le valeur de la couleur connue du point central è replacé avec le valeur moyen des valeurs des couleurs connues des points environnants ; autrement le valeur de la couleur connue du point central è maintenu ;

    3) reglage de chaque point de référence avec B ou R comme couleur connue adjacent au point central, où pour chaque point de référence si tous les valeurs de difference entre le valeur de la couleur connue du point de référence et le valeur de la couleur connue de chaque point environnant avec la même couleur du point de référence sont superieur au valeur prédeterminé et un valeur de difference entre le valeur de la couleur connue du point de référence et un moyen valeur pondéré de tous le points environnant avec la même couleur du point de référence est superieur au valeur prédeterminé, le valuer de la couleur connue du point de référence est replacé avec le valeur moyen pondéré, autrement le valeur original est utilisé, où pour M1, les équations du valeur moyen pondéré sont comme suivant:

$$Ral=1/8*(2*R12+R14+2*R34+2*R52+R54)$$

$$Rar=1/8*(R12+2*R14+2*R32+R52+2*R54)$$

$$Bau=1/8*(2*B21+2*B25+B41+2*B43+B45)$$

$$Bad=1/8*(B21+2*B23+B25+2*B41+2*B45);$$

pour M2, les équations du valeur moyen pondéré sont comme suivant:

$$Bal=1/8*(2*B12+B14+2*B34+2*B52+B54)$$

$$Bar=1/8*(B12+2*B14+2*B32+B52+2*B54)$$

$$Rau=1/8*(2*R21+2*R25+R41+2*R43+R45)$$

$$Rad=1/8*(R21+2*R23+R25+2*R41+2*R45);$$

4) interpolation pour les deux valeurs de couleur inconnues du point central: prise des valeurs moyens des valeurs de la couleur connue reglés pour les deux point avec R ou B comme couleur environnant le point central réspectivement comme valeurs éstimés pour la couleur R ou B du point central, et correction des valeurs éstimés avec les valeurs de difference entre le valeur de la couleur connue du point central et les valeurs des couleurs connues des points environnants, ainsi d'obtenir les valeurs de couleur R et B du point central, respectivement ; où dans la phase 4), pour M1 :

le valeur de R du point central est calculé comme suivant:

$$R33=1/2*(R32+R34)+1/4*(G33-Rl+G33-Rr);$$

et
le valeur de B du point central est calculé comme suivant:

$$B33=1/2*(B23+B43)+1/4*(G33-Bu+G33-Bd);$$

où

$$Rl = 1/4*(G33 + G31 + G22 + G42);$$

$$Rr = 1/4*(G33 + G35 + G24 + G44);$$

$$Bu = 1/4*(G33 + G13 + G22 + G24);$$

$$Bd = 1/4*(G33 + G53 + G42 + G44);$$

pour M2, Le valeur de B du point central est calculé comme suivant:

$$B33=1/2*(B32+B34)+1/4*(G33-Bl+G33-Br);$$

et
Le valeur de R du point central est calculé comme suivant:

$$R33=1/2*(R23+R43)+1/4*(G33-Ru+G33-Rd);$$

où

$$Bl = 1/4*(G33 + G31 + G22 + G42);$$

$$Br = 1/4*(G33 + G35 + G24 + G44);$$

$$Ru = 1/4*(G33 + G13 + G22 + G24);$$

$$Rd = 1/4*(G33 + G53 + G42 + G44).$$

| $B_{11}$ | $G_{12}$ | $B_{13}$ | $G_{14}$ | $B_{15}$ |
|---|---|---|---|---|
| $G_{21}$ | $R_{22}$ | $G_{23}$ | $R_{24}$ | $G_{25}$ |
| $B_{31}$ | $G_{32}$ | $B_{33}$ | $G_{34}$ | $B_{35}$ |
| $G_{41}$ | $R_{42}$ | $G_{43}$ | $R_{44}$ | $G_{45}$ |
| $B_{51}$ | $G_{52}$ | $B_{53}$ | $G_{54}$ | $B_{55}$ |

Fig.1

| $G_{11}$ | $B_{12}$ | $G_{13}$ | $B_{14}$ | $G_{15}$ |
|---|---|---|---|---|
| $R_{21}$ | $G_{22}$ | $R_{23}$ | $G_{24}$ | $R_{25}$ |
| $G_{31}$ | $B_{32}$ | $G_{33}$ | $B_{34}$ | $G_{35}$ |
| $R_{41}$ | $G_{42}$ | $R_{43}$ | $G_{44}$ | $R_{45}$ |
| $G_{51}$ | $B_{52}$ | $G_{53}$ | $B_{54}$ | $G_{55}$ |

Fig.2

| | | | | |
|---|---|---|---|---|
| $G_{11}$ | $R_{12}$ | $G_{13}$ | $R_{14}$ | $G_{15}$ |
| $B_{21}$ | $G_{22}$ | $B_{23}$ | $G_{24}$ | $B_{25}$ |
| $G_{31}$ | $R_{32}$ | $G_{33}$ | $R_{34}$ | $G_{35}$ |
| $B_{41}$ | $G_{42}$ | $B_{43}$ | $G_{44}$ | $B_{45}$ |
| $G_{51}$ | $R_{52}$ | $G_{53}$ | $R_{54}$ | $G_{55}$ |

Fig.3

| | | | | |
|---|---|---|---|---|
| $R_{11}$ | $G_{12}$ | $R_{13}$ | $G_{14}$ | $R_{15}$ |
| $G_{21}$ | $B_{22}$ | $G_{23}$ | $B_{24}$ | $G_{25}$ |
| $R_{31}$ | $G_{32}$ | $R_{33}$ | $G_{34}$ | $R_{35}$ |
| $G_{41}$ | $B_{42}$ | $G_{43}$ | $B_{44}$ | $G_{45}$ |
| $R_{51}$ | $G_{52}$ | $R_{53}$ | $G_{54}$ | $R_{55}$ |

Fig.4

SET THE EXCEPTIONAL POINT AS THE CENTER TO ESTABLISH THE 5*5 MATRIX.

CORRECT THE KNOWN COLOR VALUE OF THE CENTER POINT

DETERMINE THE COLOR CHANGE TRENDS IN BOTH ROW AND COLUMN DIRECTIONS OF THE CENTER POINT AND DETERMINE THE INTERPOLATION REFERENCE

THE INTERPOLATION OF THE TWO UNKOWN COLOR OF THE CENTER POINT ARE CORRECTED BASED ON THE INTERPOLATION REFERENCE

Fig.5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0732859 A